# EUROPEAN PATENT SPECIFICATION

(11) **EP 1 877 168 B1**
(45) Date of publication and mention of the grant of the patent: **06.10.2010**
(21) Application number: 06726657.7
(22) Date of filing: 05.04.2006
(51) Int. Cl.: B01D 71/02, H01M 4/90, H01M 4/86, H01M 4/88

(54) **HIGH PERFORMANCE SOFC CATHODE MATERIAL IN THE 450°C - 650°C RANGE**
HOCHLEISTUNGSFÄHIGES SOFC-KATHODENMATERIAL IM BEREICH 450°C-650°C
MATERIAU DE CATHODE SOFC HAUTES PERFORMANCES DANS LA GAMME DE 450 °C A 650 °C

(30) Priority: 08.04.2005 GB 0507180
(43) Date of publication of application: 16.01.2008
(73) Proprietor: Ceres Intellectual Property Company Limited, Horsham Sussex RH13 5PX (GB)
(72) Inventor: BARON, Sylvia Unit 18, Denvale Trade Park, Crawley West Sussex RH10 1SS (GB); KILNER, John Unit 18, Denvale Trade Park, West Sussex RH10 1SS (GB); RUDKIN, Robert Unit 18, Denvale Trade Park, Crawley West Sussex RH10 1SS (GB)
(74) Representative: Robertson, James Alexander
(86) International application number: PCT/GB2006/001254
(87) International publication number: WO 2006/106334

(56) References cited:
- WO-A-03/001617
- WO-A-03/052858
- GB-B- 2 368 450
- US-A1- 2003 082 436
- US-A1- 2004 231 143
- AL DAROUKH M ET AL: "Oxides of the AMO3 and A2MO4-type: structural stability, electrical conductivity and thermal expansion" SOLID STATE IONICS, NORTH HOLLAND PUB. COMPANY. AMSTERDAM, NL, vol. 158, no. 1-2, February 2003 (2003-02), pages 141-150, XP004410765 ISSN: 0167-2738
- HASHIMOTO S-I ET AL: "Study on the structural and electrical properties of Sr1-xCexMnO3-alpha (x = 0.1, 0.3) perovskite oxide" MATERIALS RESEARCH BULLETIN, ELSEVIER, KIDLINGTON, GB, vol. 35, no. 14-15, November 2000 (2000-11), pages 2253-2262, XP004231683 ISSN: 0025-5408
- OHTANI T ET AL: "Electrical resistivity and thermopower of (La1-xSrx)MnO3 and (La1-xSrx)CoO3 at elevated temperatures" JOURNAL OF THE EUROPEAN CERAMIC SOCIETY, ELSEVIER SCIENCE PUBLISHERS, BARKING, ESSEX, GB, vol. 20, no. 16, 2000, pages 2721-2726, XP004223303 ISSN: 0955-2219
- KAWADA T ET AL: "Oxygen isotope exchange with a dense La0.6Sr0.4CoO3-delta electrode on a Ce0.9Ca0.1O1.9 electrolyte" SOLID STATE IONICS, NORTH HOLLAND PUB. COMPANY. AMSTERDAM, NL, vol. 121, no. 1-4, June 1999 (1999-06), pages 271-279, XP004166485 ISSN: 0167-2738
- SIEBERT E ET AL: "Impedance spectroscopy analysis of La1 - xSrxMnO3-Yttria-stabilized zirconia electrode kinetics" ELECTROCHIMICA ACTA, ELSEVIER SCIENCE PUBLISHERS, BARKING, GB, vol. 40, no. 11, August 1995 (1995-08), pages 1741-1753, XP004019784 ISSN: 0013-4686
- PATENT ABSTRACTS OF JAPAN vol. 1999, no. 13, 30 November 1999 (1999-11-30) & JP 11 214014 A (TOKYO GAS CO LTD), 6 August 1999 (1999-08-06)
- PATENT ABSTRACTS OF JAPAN vol. 1997, no. 05, 30 May 1997 (1997-05-30) & JP 09 027330 A (TOKYO GAS CO LTD), 28 January 1997 (1997-01-28)
- PATENT ABSTRACTS OF JAPAN vol. 2002, no. 03, 3 April 2002 (2002-04-03) & JP 2001 307750 A (TOKYO GAS CO LTD), 2 November 2001 (2001-11-02)

## Description

The present invention describes the chemical formula for, and the stoichiometric limits of a novel perovskite material system which may be used as an active material in solid state electrochemical devices; particularly solid oxide fuel cell cathodes.

### Convention

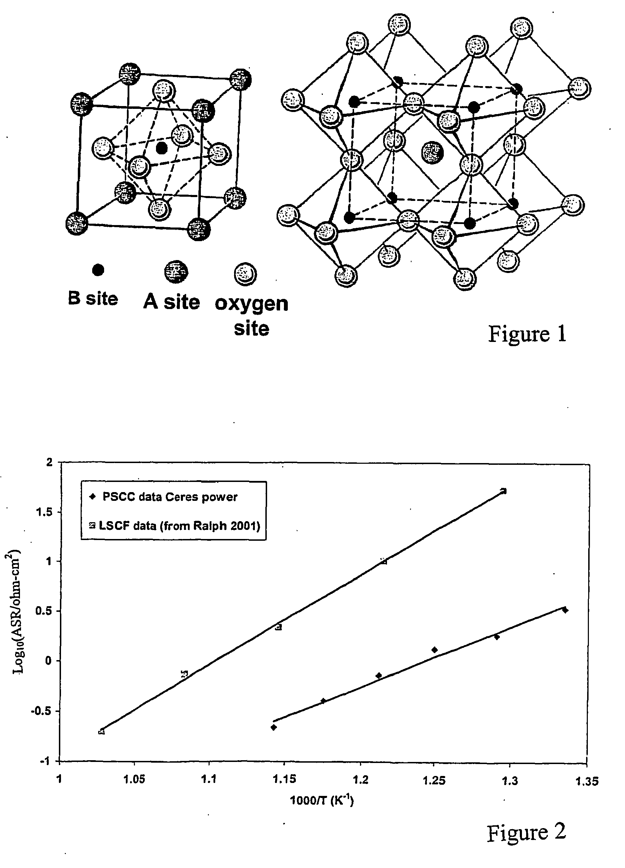

There are two cathode material systems currently used extensively in the fuel cell and oxygen generator field that define state of the art convention. Both are perovskites of general formula ABO₃ as shown in Figure 1. The most established and widely reported is LSCF (La₍₁₋ₓ₎SrₓCo_{y}Fe_{(1-y)}O_{(3-δ)}, where 0<x<1 and 0<y<1), the second is LSM (La₍₁₋ₓ₎SrₓMn O_{(3-δ)} where 0<x<1) where δ here and in subsequent formulae represents the degree of oxygen deficiency. LSM is more often found in higher temperature operation solid oxide fuel cell (SOFC) systems comprising YSZ electrolytes. Typical operating temperatures for such systems are in the 750°C-1000°C range. LSCF based cathodes can operate at lower temperatures and LSCF is therefore the current material of choice for lower temperature YSZ electrolyte based systems and CGO electrolyte based systems. Typical operating temperatures for such systems are in the 600°C-800°C range.

### Limitations of Convention

In the field of SOFC technology, when considering performance and cost, there is a constant need to reduce the target operating temperature. The desire for reduced temperature operation drives the requirement for new single phase ceramic materials. Such materials must posses the necessary physical, chemical and electrical properties for acceptable electrode performance when operating the fuel cell at reduced temperatures. Two such key material properties are electrochemical activity and electronic conductivity.

The electrochemical activity and electronic conductivity of conventional cathode materials in the temperature range 450°C-600°C are limiting with respect to optimal fuel cell performance. This is the target temperature range of operation for the stainless steel supported, CGO electrolyte based fuel cell described in GB 2,368,450 and cathode materials capable of improved lower temperature performance are sought.

Many materials of perovskite type, ABO₃ have been used as cathode materials in SOFCs. The perovskite structure is illustrated schematically in FIG. 1. The larger A cation is coordinated by 12 oxygen ions and the smaller B cation by 6 oxygen ions.

PrCOO₃ is one such perovskite material and has been reported in U.S. 6, 319,626 as a potential cathode material for use in YSZ electrolyte based systems operating at temperatures in the region of 800°C. Results have also been published on various derivatives of the parent perovskite with lower valence cations substituted onto the A site. An example of such a material is Pr_{0.8}Sr_{0.2}CoO₃ (PSC).

Other relevant prior art includes WO 03/001617 which discloses various electrically conductive anode materials. However, it neither suggests nor discloses oxygen-deficient materials, nor does it teach the formulation of cathode materials, nor does it teach materials with ionic conductivity.

It is an aim of an embodiment of the present invention to provide a material with improved performance in the temperature range utilised by the fuel cell described in GB 2,368,450 typically below 800°C, preferably below 700°C and more preferably between 450°C-600°C.

According to a first aspect of the present invention there is provided a material defined by the formula:

**Ln₍₁₋ₓ₎AeₓB_{(1-y)}Ce_{y}O_{(3-δ)};**

where:
- Ln is any of La, Ce, Pr, Nd, Pm, Sm, Eu, Gd, Tb, Dy, Ho, Er, Tm or Yb
- Ae is any member of the alkaline earth family such as Ca, Sr or Ba; and
- B is any of Fe, Co, Ni, Cu, Mg, Ti, V, Cr, Mn, Nb, Mo, W, Zr
- with δ>0, 0<x<1 and 0<y<0.5.

An aspect of this family of perovskite materials that specifically defines its novelty is that with reference to the general conventional perovskite notation ABO₃, Cerium is substituted onto the 'B' site.

It has been found that examples of this material exhibit greatly improved electrochemical and electronic performance when used as an electrode material, current collector or membrane in an electrochemical device such as a fuel cell or oxygen separator for example, especially below 800°C preferably below 700°C and more preferably in the temperature range 450°C-600°C. The use of cerium as the substituting B site ion also improves cathode - electrolyte chemical compatibility when the material is used as a cathode within ceria based electrolyte fuel cell systems. A further advantage of the material of the first aspect of the present invention is that when compared to materials with undoped B site stoichiometry, the thermal expansion coefficient (TEC) is reduced, reducing the likelihood of separation from adjoining materials, when in use, due to temperature variations. Examples of this material can be obtained by standard solid state techniques. The perovskite material system PSCC (Pr_{0.5}Sr_{0.5}Ce_{0.2}Co_{0.8}O_{(3-δ)}) is a specific example of a family of materials defined by the first aspect of the present invention.

According to a second aspect of the present invention there is provided a composite material including **Ln₍₁₋ₓ₎AeₓB_{(1-y)}Ce_{y}O_{(3-δ)}** as described above in the first aspect of the present invention, with a second material being an oxygen ion conductor. An example of such an oxygen ion conducting material system to be provided with the material of the first aspect of the present invention to provide a composite is ceria (CeO₂) and solid solutions of ceria with other oxides; a specific example of such a solid solution being CGO (Ce₍₁₋ₓ₎GdₓO_{(2-δ)} where 0<x<0.5). A second example of such an oxygen ion conducting system to be provided with the material of the first aspect of the present invention to provide a composite system is zirconia (ZrO₂) and solid solutions of zirconia with other oxides, examples of such a solid solution being YSZ (Zr₍₁₋ₓ₎YₓO_{(2-δ)} where 0<x<0.1). An example of such a composite material is (1-z)PSCC/zCGO where z is the volume fraction of CGO.

According to a third aspect of the present invention there is provided an electrode material, current collector or membrane for use in any solid state electrochemical device, wherein the electrode material, current collector or membrane comprises the material according to the first aspect of the present invention or the composite material according to the second aspect of the present invention. The electrode material is preferably a mixed electronic and oxide ion conducting electrode material. Examples of the third aspect of the present invention include an electrode material on ceria based electrolytes, an electrode material on any electrolyte with a ceria based interface layer, an SOFC cathode, an SOFC current collector, an electrode material in an electrically driven oxygen separator and a membrane in a pressure driven oxygen separator.

According to a fourth aspect of the present invention there is provided an electrochemical device, such as a SOFC or an oxygen generator including an electrode, current collector or membrane including the material according to the first aspect of the present invention or the composite material according to the second aspect of the present invention.

The material and its composites are found to work particularly well at relatively low temperatures such as below 800°C, below 700°C or below 600°C such as between 450°C and 600°C.

Examples of the present invention will now be described with reference to the accompanying drawings, in which:
Figure 1 shows a schematic of a general perovskite structure;
Figure 2 shows a graphical comparison of the cathode area specific resistance vs. reciprocal temperature for an example of a cathode of the material according to the present invention (PSCC) and LSCF;
Figure 3 shows a graphical comparison of the cathode area specific resistance vs. reciprocal temperature for an example of a cathode made from a composite material according to the present invention (PSCC/CGO) and a composite of LSCF/CGO;
Figure 4 shows a graphical comparison of cathode area specific resistance vs. reciprocal temperature for an example of a cathode of a material according to the present invention (PSCC) and PSC;
Figure 5 is a scanning electron microscope view of a fuel cell cross-section with a composite PSCC/CGO cathode and
Figure 6 shows a power curve taken at 570°C for a fuel cell as described in GB 2, 368,450 processed with a PSCC/CGO cathode.

The material of the present invention could be produced by any suitable standard process such as producing a powder by mixed oxide, nitrate, glycine/nitrate routes. The powder would then be made into a usable media for cathode processing such as by providing screen printing ink, tape casting slurry, spray suspension etc. It would then be deposited on a fuel cell electrolyte or support and sintered.

Figure 2 shows the cathode area specific resistance (ASR) vs. reciprocal temperature for a PSCC cathode measured by the applicant and an LSCF cathode using data from Ralph: Solid State Ionics, Volume 159, Issues 1-2, March 2003, pages 71-78. The ASR was taken as the sum of the cathode low frequency and high frequency arc resistances obtained by AC impedance spectroscopy. As can be seen, the PSCC cathode exhibited much lower ASR for a given temperature.

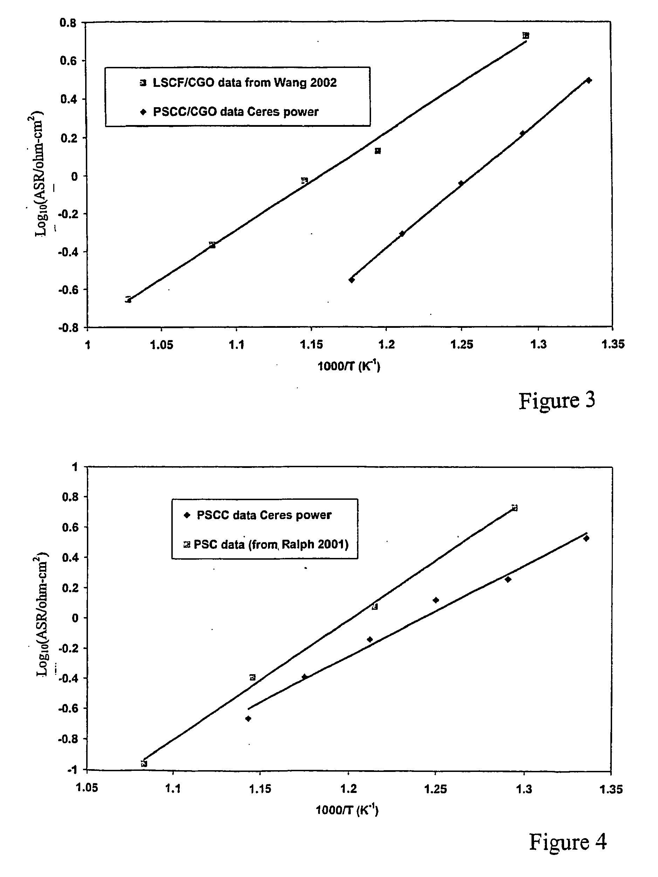

Figure 3 shows a similar comparison between a 70/30 wt % PSCC/CGO composite and a 70/30 wt % LSCF/CGO composite using data from Wang: Solid State Ionics, Volumes 152-153, December 2002, Pages 477-484. As can be seen, the 70/30 wt % PSCC/CGO composite exhibited much lower cathode area specific resistance for a given temperature.

Figure 4 shows a similar comparison between PSCC and PSC using data from Ralph: Solid State Ionics Volume 159, Issues 1-2, March 2003, pages 71-78. As can be seen, the PSCC exhibited much lower cathode area specific resistance for a given temperature.

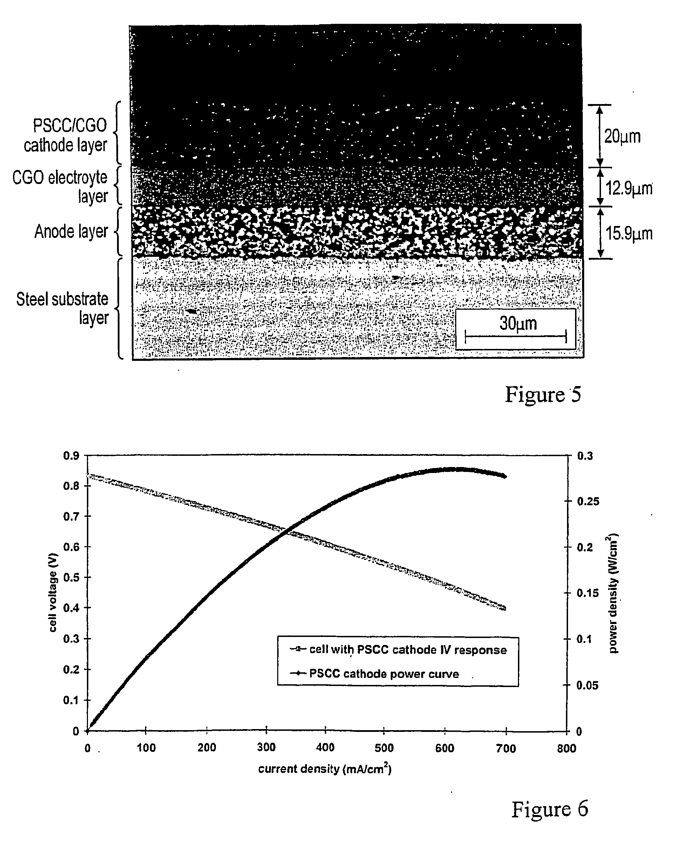

Figure 5 shows a scanning electron microscope view of a fuel cell cross-section with a PSCC/CGO cathode showing a robust electrolyte cathode/electrolyte interface. The fuel cell was found to exhibit good compatibility between the electrolyte and the cathode post processing.

Figure 6 shows a power curve taken at 570°C for a fuel cell as in GB 2, 368, 450 processed with a PSCC/CGO cathode. The power curve demonstrates practical power densities in the target temperature range.

## Claims

1. A material defined by the formula:
Ln₍₁₋ₓ₎AeₓB_{(1-y)}Ce_{y}O_{(3-δ)};
where:
- Ln is any of La, Ce, Pr, Nd, Pm, Sm, Eu, Gd, Tb, Dy, Ho, Ex, Tm or Yb
- Ae is any member of the alkaline earth family such as Ca, Sr or Ba; and
- B is any of Fe, Co, Ni, Cu, Mg, Ti, V, Cr, Mn, Nb, Mo, W, Zr
- with δ>0, 0<x<1 and 0<y<0.5

2. A composite material comprising the material according to claim 1 and a further material, the further material being an oxygen ion conductor.

3. A composite material according to claim 2, wherein the further material includes ceria.

4. A composite material according to claim 3, wherein the further material is a solid solution of ceria with other oxides.

5. A composite according to claim 4, wherein the solid solution is CGO (Ce₍₁₋ₓ₎GdₓO_{(2-δ)} where 0<x<0.5)

6. A composite material according to claim 2, wherein the further material includes zirconia.

7. A composite material according to claim 6, wherein the further material is a solid solution of zirconia with other oxides.

8. A composite material according to claim 7, wherein the solid solution is (Zr₍₁₋ₓ₎ YₓO_{(2-δ)} where 0<x<0.1).

9. An electrode for an electrochemical device including the material according to claim 1 or the composite material according to any one of claims 2 to 8.

10. An electrode according to claim 9, provided on a ceria based electrolyte.

11. An electrode according to claim 9, provided on an electrolyte with a ceria based interface layer.

12. A current collector for an electrochemical device, the current collector including the material according to claim 1 or the composite material according to any of claims 2 to 8.

13. A membrane for an electrochemical device, the membrane including the material according to claim 1 or the composite material according to any one of claims 2 to 8.

14. An electrochemical device including an electrode, current collector or membrane including the material according to claim 1 or the composite material according to any one of claims 2 to 8.

15. A solid oxide fuel cell with a cathode including the material according to claim 1 or the composite material according to any one of claims 2 to 8, an electrolyte and an anode.

16. A solid oxide fuel cell with a current collector including the material according to claim 1, or the composite material according to any one of claims 2 to 8.

17. An oxygen generator with at least one electrode according to any one of claims 9 to 11.

18. An oxygen generator with a membrane including the material according to claim 1 or the composite material according to any one of claims 2 to 8.

## Patentansprüche

1. Material, definiert durch die Formel:
Ln₍₁₋ₓ₎AeₓB_{(1-y)}Ce_{y}O_{(3-δ)};
wobei :
- Ln eine der Substanzen La, Ce, Pr, Nd, Pm, Sm, Eu, Gd, Tb, Dy, Ho, Er, Tm oder Yb ist;
- Ae ein Mitglied der Erdalkaligruppe ist, wie z. B. Ca, Sr oder Ba; und
- B eine der Substanzen Fe, Co, Ni, Cu, Mg, Ti, V, Cr, Mn, Nb, Mo, W, Zr ist;
- mit δ > 0, 0 < x < 1 und 0 < y < 0,5.

2. Verbundmaterial, welches das Material nach Anspruch 1 und ein weiteres Material aufweist, wobei das weitere Material ein Sauerstoffionenleiter ist.

3. Verbundmaterial nach Anspruch 2, wobei das weitere Material Ceroxid enthält.

4. Verbundmaterial nach Anspruch 3, wobei das weitere Material eine feste Lösung von Ceroxid mit anderen Oxiden ist.

5. Verbundmaterial nach Anspruch 4, wobei die feste Lösung CGO (Ce₍₁₋ₓ₎GdₓO_{(2-δ)} mit 0 < x < 0,5) ist.

6. Verbundmaterial nach Anspruch 2, wobei das weitere Material Zirconiumdioxid enthält.

7. Verbundmaterial nach Anspruch 6, wobei das weitere Material eine feste Lösung von Zirconiumdioxid mit anderen Oxiden ist.

8. Verbundmaterial nach Anspruch 7, wobei die feste Lösung (Zr₍₁₋ₓ)YₓO_{(2-δ)} mit 0 < x < 0,1) ist.

9. Elektrode für ein elektrochemisches Element, die das Material nach Anspruch 1 oder das Verbundmaterial nach einem der Ansprüche 2 bis 8 enthält.

10. Elektrode nach Anspruch 9, aufgebracht auf einen Elektrolyt auf Ceroxidbasis.

11. Elektrode nach Anspruch 9, aufgebracht auf einen Elektrolyt mit einer Grenzschicht auf Ceroxidbasis.

12. Stromkollektor für ein elektrochemisches Element, wobei der Stromkollektor das Material nach Anspruch 1 oder das Verbundmaterial nach einem der Ansprüche 2 bis 8 enthält.

13. Membran für ein elektrochemisches Element, wobei die Membran das Material nach Anspruch 1 oder das Verbundmaterial nach einem der Ansprüche 2 bis 8 enthält.

14. Elektrochemisches Element, das eine Elektrode, einen Stromkollektor oder eine Membran aufweist, die das Material nach Anspruch 1 oder das Verbundmaterial nach einem der Ansprüche 2 bis 8 enthalten.

15. Festoxid-Brennstoffzelle mit einer Kathode, die das Material nach Anspruch 1 oder das Verbundmaterial nach einem der Ansprüche 2 bis 8 enthält, einem Elektrolyt und einer Anode.

16. Festoxid-Brennstoffzelle mit einem Stromkollektor, der das Material nach Anspruch 1 oder das Verbundmaterial nach einem der Ansprüche 2 bis 8 enthält.

17. Sauerstoffgenerator mit mindestens einer Elektrode nach einem der Ansprüche 9 bis 11.

18. Sauerstoffgenerator mit einer Membran, die das Material nach Anspruch 1 oder das Verbundmaterial nach einem der Ansprüche 2 bis 8 enthält.

## Revendications

1. Matériau défini par la formule:
Ln₍₁₋ₓ₎AeₓB_{(1-y)}Ce_{y}O_{(3-δ)};
dans laquelle:
- Ln est n'importe lequel parmi La, Ce, Pr, Nd, Pm, Sm, Eu, Gd, Tb, Dy, Ho, Er, Tm ou Yb;
- Ae est n'importe quel membre de la famille des alcalino-terreux tel que Ca, Sr ou Ba; et
- B est n'importe lequel parmi Fe, Co, Ni, Cu, Mg, Ti, V, Cr, Mn, Nb, Mo, W, Zr;
- avec δ > 0, 0 < x < 1 et 0 < y < 0,5.

2. Matériau composite comprenant le matériau selon la revendication 1 et un matériau supplémentaire, le matériau supplémentaire étant un conducteur d'ion oxygène.

3. Matériau composite selon la revendication 2, dans lequel le matériau supplémentaire inclut de l'oxyde de cérium.

4. Matériau composite selon la revendication 3, dans lequel le matériau supplémentaire est une solution solide d'oxyde de cérium avec d'autres oxydes.

5. Matériau composite selon la revendication 4, dans lequel la solution solide est CGO (Ce₍₁₋ₓ₎GdₓO_{(2-δ)} où 0 < x < 0,5).

6. Matériau composite selon la revendication 2, dans lequel le matériau supplémentaire inclut de l'oxyde de zirconium.

7. Matériau composite selon la revendication 6, dans lequel le matériau supplémentaire est une solution solide d'oxyde de zirconium avec d'autres oxydes.

8. Matériau composite selon la revendication 7, dans lequel la solution solide est (Zr₍₁₋ₓ₎YₓO_{(2-δ)} où 0 < x < 0,1).

9. Electrode pour un dispositif électrochimique incluant le matériau selon la revendication 1 ou le matériau composite selon l'une quelconque des revendications 2 à 8.

10. Electrode selon la revendication 9, fournie sur un électrolyte à base d'oxyde de cérium.

11. Electrode selon la revendication 9, fournie sur un électrolyte avec une couche d'interface à base d'oxyde de cérium.

12. Collecteur de courant pour un dispositif électrochimique, le collecteur de courant incluant le matériau selon la revendication 1 ou le matériau composite selon l'une quelconque des revendications 2 à 8.

13. Membrane pour un dispositif électrochimique, la membrane incluant le matériau selon la revendication 1 ou le matériau composite selon l'une quelconque des revendications 2 à 8.

14. Dispositif électrochimique incluant une électrode, un collecteur de courant ou une membrane incluant le matériau selon la revendication 1 ou le matériau composite selon l'une quelconque des revendications 2 à 8.

15. Pile à combustible d'oxyde solide avec une cathode incluant le matériau selon la revendication 1 ou le matériau composite selon l'une quelconque des revendications 2 à 8, un électrolyte et une anode.

16. Pile à combustible d'oxyde solide avec un collecteur de courant incluant le matériau selon la revendication 1 ou le matériau composite selon l'une quelconque des revendications 2 à 8.

17. Générateur d'oxygène avec au moins une électrode selon l'une quelconque des revendications 9 à 11.

18. Générateur d'oxygène avec une membrane incluant le matériau selon la revendication 1 ou le matériau composite selon l'une quelconque des revendications 2 à 8.
